Europäisches Patentamt

European Patent Office

Office européen des brevets

(19)

(11) Veröffentlichungsnummer : **0 077 939**
**B1**

(12)

# EUROPÄISCHE PATENTSCHRIFT

(45) Veröffentlichungstag der Patentschrift :
16.04.86

(51) Int. Cl.⁴ : **G 01 V   5/00**

(21) Anmeldenummer : 82109202.0

(22) Anmeldetag : 05.10.82

(54) Vorrichtung zum Durchleuchten von Körpern mit Röntgenstrahlung.

(30) Priorität : 28.10.81 DE 3142759

(43) Veröffentlichungstag der Anmeldung :
04.05.83 Patentblatt 83/18

(45) Bekanntmachung des Hinweises auf die Patenterteilung : 16.04.86 Patentblatt 86/16

(84) Benannte Vertragsstaaten :
BE DE FR GB

(56) Entgegenhaltungen :
EP-A- 0 039 108
DE-A- 2 618 906
US-A- 3 808 444

(73) Patentinhaber : Heimann GMBH
Weher Köppel 6
D-6200 Wiesbaden 1 (DE)

(72) Erfinder : Springer, Klaus
Feldstrasse 2
D-6251 Eisenbach (DE)
Erfinder : Herwig, Thomas, Dipl.-Phys.
Wiesenstrasse 8
D-6228 Eltville-Martinsthal (DE)
Erfinder : Dietrich, Rolf, Dipl.-Ing.
Breckenheimerstrasse 20
D-6238 Hofheim (DE)

(74) Vertreter : Mehl, Ernst, Dipl.-Ing. et al
Postfach 22 01 76
D-8000 München 22 (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 077 939 B1

**Beschreibung**

Die vorliegende Erfindung betrifft eine Vorrichtung zum Durchleuchten von Körpern gemäß dem Oberbegriff des Patentanspruches 1.

Derartige Vorrichtungen weisen üblicherweise eine Röntgenstrahlungsquelle auf, deren optischer Brennfleck gegenüber den zu durchleuchtenden Gepäckstücken kleine Abmessungen besitzt. Sie ist daher annähernd als punktförmige Strahlungsquelle zu behandeln. Soll von einer derartigen Strahlungsquelle ein Körper vollständig durchleuchtet werden, so muß der Abstrahlungswinkel auf die der Strahlungsquelle zunächst liegenden Abmessungen des Körpers eingestellt werden. Die von der Strahlungsquelle entfernter liegenden Teile des Körpers benötigen bei gleicher Größe einen kleineren Abstrahlungswinkel von der Strahlungsquelle.

Dadurch bedingt muß die Empfangsfläche wesentlich größer sein als die größten zulässigen Abmessungen der Körper auf der der Strahlung zugewandten Seite. Um nicht allzu große Empfangsflächen zu erhalten, kann der Abstand zwischen der Strahlungsquelle und der ihr zugewandten Seite der zu messenden Körper relativ groß gewählt werden. Sowohl eine sehr große Empfangsfläche als auch ein großer Abstand zwischen der Röntgenstrahlungsquelle und den zu messenden Körpern bedingen große Abmessungen des gesamten Gerätes. Dies ist insbesondere bei Gepäckprüfanlagen störend, da diese möglichst ohne Schwierigkeiten von einem Raum in einen anderen, durch Türen üblicher Größe hindurch, bewegbar sein sollen. Außerdem ist am Einsatzort, beispielsweise auf Flughäfen, in der Regel nur eine geringe Stellfläche pro Gerät verfügbar. Die Bauhöhe ist durch die Forderung begrenzt, daß derartige Geräte gleichzeitig als Schreibtisch einsetzbar sein sollen. Andererseits muß der Prüfraum so groß sein, daß alle üblichen Gepäckstücke hindurchgeschleust werden können.

In der EP-A-0 039 108 unter Art. 54 (3), (4) und 89 EPÜ ; Veröffentlichungstag : 04.11.81 ; Priorität : 30.04.80 ist eine Vorrichtung zum Durchleuchten von Körpern mit Röntgenstrahlung, welche zwei Röntgenstrahlungsquellen, einen Prüfraum für die Körper mit einer Eintrittsfläche für die Röntgenstrahlung und in Richtung der Röntgenstrahlung hinter diesem Prüfraum eine Empfangsfläche aufweist, bekannt, bei der die Röntgenstrahlungsquellen zueinander im Abstand angeordnet sind. Die eine Röntgenstrahlungsquelle durchstrahlt dabei auf der Oberseite des Prüfraumes durch diesen hindurchgeführte Gepäckstücke und die andere Röntgenstrahlungsquelle Gepäckstücke, die mit Hilfe einer Transportvorrichtung auf der Unterseite des Prüfraumes befördert werden. Die Empfangsfläche ist dabei ein röntgenstrahlenempfindlicher Schirm, der von einer Fernsehkamera aufgenommen wird.

In der DE-A-2 618 906 ist eine Vorrichtung gemäß dem Oberbegriff des Patentanspruches 1 beschrieben, bei der sich die von den Röntgenstrahlungsquellen ausgesandten Strahlenbündel nur teilweise auf der Empfangsfläche dekken. Für die bildliche Wiedergabe des untersuchten Bereiches des Prüfobjektes ist diese Einrichtung nicht gedacht. Sie dient zur Dickenmessung, liefert also Meßsignale, die der Dicke des Untersuchungsobjektes entsprechen.

Der Erfindung liegt die Aufgabe zugrunde, eine Vorrichtung gemäß dem Oberbegriff des Patentanspruches 1 so auszubilden, daß eine vollständige Durchleuchtung, d. h, eine bildliche Wiedergabe der zu prüfenden Körper bei relativ geringen Abmessungen der Vorrichtung erfolgt.

Diese Aufgabe ist erfindungsgemäß durch die im kennzeichnenden Teil des Patentanspruches 1 angegebene Ausbildung gelöst.

Die beiden Röntgenstrahlungsquellen durchleuchten jeweils einen Teil der Körper. Die Entfernungen der beiden Strahlungsquellen von der diesen zugewandten Seite der größten in der Vorrichtung zugelassenen Körper und die Winkel der auf die Empfangsfläche von jeder einzelnen Strahlungsquelle auftreffenden Strahlung müssen nur so groß gewählt werden, daß auf der den Strahlungsquellen zugewandten Seite der größten zulässigen Körper die gesamte Oberfläche mit einer Strahlung durchleuchtet wird, die von der Empfangsfläche auch empfangen wird. Bei symmetrischer Ausführung muß beispielsweise jede Strahlungsquelle die halbe Körperabmessung auf der ihr zugewandten Seite des Körpers erfassen. Die Empfangsfläche braucht dabei kaum länger zu sein als die größte Abmessung der senkrechten Projektion der zu prüfenden Körper auf die Empfangsfläche.

Vorteilhaft werden jeweils nur schmale Streifen durchleuchtet, die Abschwächung der Röntgenstrahlung wird in zumindest einer Zeile bzw. Spalte von Detektoren gemessen, die Meßwerte werden einer Zeile bzw. einer Spalte eines Bildspeichers zugeführt, dabei werden die von den beiden Röntgenstrahlungsquellen herrührenden Meßwerte voneinander getrennt gespeichert. Dies ermöglicht eine lückenlose Analyse des Prüfgutes, indem die getrennt gespeicherten Meßwerte als Teilbilder der verschiedenen Röntgenstrahlungsquellen getrennt wiedergegeben werden. Um ein Gesamtbild des geprüften Körpers zu erhalten, werden die getrennt gespeicherten Meßwerte aus den verschiedenen Röntgenstrahlungsquellen durch ein elektronisches Bildverarbeitungssystem zu einem einzigen Bild vereinigt. In diesem Fall können auch durch doppelte Belichtung von Teilen des Körpers hervorgerufene Helligkeitsunterschiede elektronisch kompensiert werden, so daß ein Bild gleichmäßiger Grundhelligkeit entsteht.

Die Erfindung wird nun anhand von drei Figuren näher erläutert.

Figur 1 zeigt eine bisher übliche Anordnung schematisch,

Figur 2 zeigt eine erfindungsgemäße Anordnung schematisch in teilweise geschnittener Ansicht, und

Figur 3 zeigt eine bevorzugte Schaltung für eine erfindungsgemäße Anordnung.

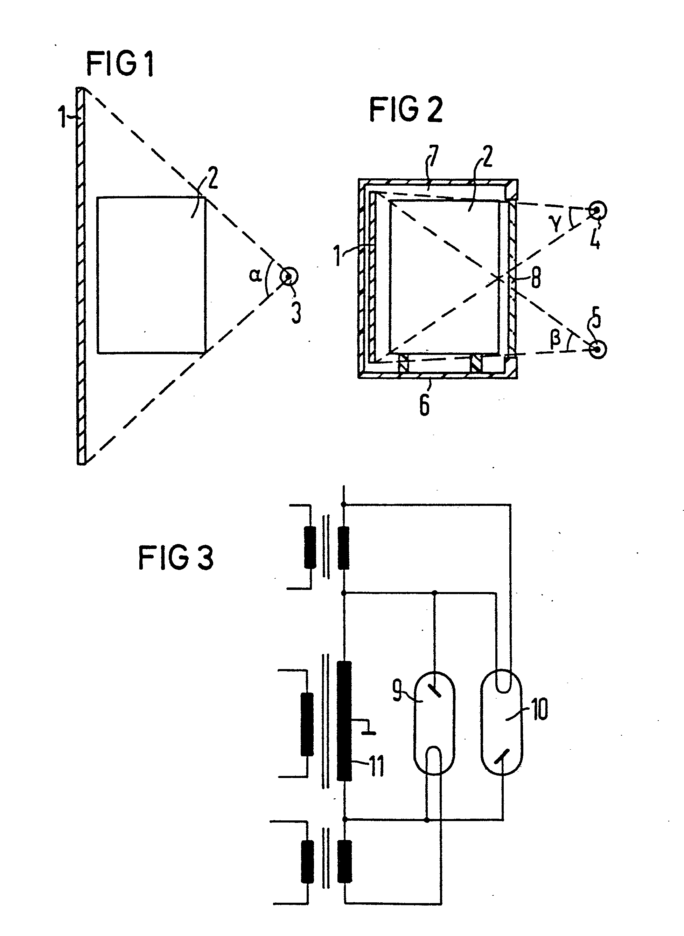

Auf eine Empfangsfläche 1 trifft gemäß Fig. 1 die einen Körper 2 durchdringende Röntgenstrahlung auf, die von der Röntgenstrahlungsquelle 3 ausgeht. Der Winkel α der von der Röntgenstrahlungsquelle 3 ausgesandten Strahlung muß so groß gewählt werden, daß die der Röntgenstrahlungsquelle 3 zugewandte Seite des Körpers 2 von der Röntgenstrahlung voll erfaßt wird. Demgemäß muß die Empfangsfläche 1 wesentlich größer sein als die größten zugelassenen Abmessungen für den Körper 2.

Erfindungsgemäß werden daher zwei Röntgenstrahlungsquellen 4 und 5 eingesetzt. Die Empfangsfläche 1 braucht im Beispiel gemäß Fig. 2 in der Bildebene nur unwesentlich größer zu sein als die größten zulässigen Abmessungen der senkrechten Projektion des Körpers 2 im Prüfraum 7 auf die Empfangsfläche 1. Der Abstand der Strahlungsquellen 4 und 5 und die Winkel β, γ der eingestrahlten Röntgenstrahlung müssen nur so groß gewählt werden, daß die beiden Strahlungsquellen 4 und 5 gemeinsam die diesen zunächst liegende Oberfläche des Körpers 2 vollständig erfassen. Der Abstand der beiden Röntgenstrahlungsquellen 4, 5 voneinander ist im vorliegenden Beispiel vorteilhaft etwas geringer als die größtmögliche senkrechte Projektion der Körper, da die aus bautechnischen Gründen notwendige Höhe des Gehäuses 6 für die Empfangsfläche voll genutzt werden kann. Dadurch ergibt sich eine besonders vorteilhafte Raumausnutzung.

Die Eintrittsfläche für die Röntgenstrahlung ist im vorliegenden Beispiel durch ein für Röntgenstrahlung durchlässiges Fenster 8 gebildet, welches in das für Röntgenstrahlung undurchlässige Gehäuse 6 eingesetzt ist.

Die Schaltung gemäß Fig. 3 ermöglicht es, zwei Röntgenröhren 9 und 10 durch nur eine Hochspannungswicklung 11 eines Hochspannungstransformators im Halbwellenmodus gegenphasig abwechselnd zu betreiben. Jede der Röntgenröhren 9 und 10 sendet abwechselnd in einer Halbwelle der Hochspannung Röntgenstrahlung aus.

## Patentansprüche

1. Vorrichtung zum Durchleuchten von Körpern (2) mit Röntgenstrahlung, welche zwei Röntgenstrahlungsquellen (4, 5), einen Prüfraum (7) für die Körper (2) mit einer streifenförmigen Eintrittsfläche (8) für die Röntgenstrahlung und in Richtung der Röntgenstrahlung hinter diesem Prüfraum eine streifenförmige Empfangsfläche (1) aufweist, bei der die Röntgenstrahlungsquellen (4, 5) zueinander und zur Eintrittsfläche (8) derartige Abstände aufweisen, daß die auf die Empfangsfläche (1) auftreffende Strahlung jeder einzelnen Röntgenstrahlungsquelle (4, 5) einen Teil, die gesamte Strahlung aus allen Röntgenstrahlungsquellen jedoch alle Teile des Körpers (2) durchleuchtet, dadurch gekennzeichnet, daß die Streifenlänge der Eintrittsfläche (8) und die der Empfangsfläche (1) wenig verschieden sind und daß die Röntgenstrahlungsquellen (4, 5) etwa in Höhe der beiden Streifenenden angeordnet sind, derart, daß die Strahlung der beiden Röntgenstrahlungsquellen (4, 5) die zunächstliegende Oberfläche des Körpers (2) vollständig erfasst.

2. Vorrichtung nach Anspruch 1, dadurch gekennzeichnet, daß die Abschwächung der Röntgenstrahlungen in zumindest einer Zeile bzw. Spalte von Detektoren gemessen wird, daß diese Meßwerte einer Zeile bzw. Spalte eines Bildspeichers zugeführt werden, daß dabei die von den beiden Röntgenstrahlungsquellen (4, 5) herrührenden Meßwerte voneinander getrennt gespeichert werden.

3. Vorrichtung nach Anspruch 2, dadurch gekennzeichnet, daß die getrennt gespeicherten Meßwerte als Teilbilder der beiden Röntgenstrahlungsquellen (4, 5) getrennt wiedergegeben werden.

4. Vorrichtung nach Anspruch 2, dadurch gekennzeichnet, daß die getrennt gespeicherten Meßwerte der Röntgenstrahlungsquellen (4, 5) durch ein elektronisches Bildverarbeitungssystem zu einem einzigen Bild vereinigt werden.

## Claims

1. A device for inspecting bodies (2) with X-rays, which has two X-ray sources (4, 5), a testing room (7) for the bodies (2) with a strip-shaped inlet surface (8) for the X-ray radiation and a strip-shaped receiving surface (1) following the testing room in the direction of the X-ray radiation, wherein the X-ray sources (4, 5) are spaced from one another and from the inlet surface (8) such that the radiation of each individual X-ray source (4, 5) incident upon the receiving surface (1) illuminates part of the body (2), the entire radiation from all X-ray sources illuminating all parts of the body, characterised in that the strip length of the inlet surface (8) and that of the receiving surface (1) are substantially equal, and that the X-ray sources (4, 5) are arranged approximately at the level of the two strip ends, such that the radiation of the two X-ray sources (4, 5) completely covers the nearest surface of the body (2).

2. A device as claimed in Claim 1, characterised in that the reduction of intensity of the X-ray radiation in at least one row or column is measured by detectors, that these measured values are supplied to a row or column of an image store, and that the measured values emanating from the two X-ray sources (4, 5) are stored separately from one another.

3. A device as claimed in Claim 2, characterised in that the separately stored measured values are separately reproduced as partial images of the two X-ray sources (4, 5).

4. A device as claimed in Claim 2, characterised in that the separately stored measured values of the X-ray sources (4, 5) are combined to form one single image by an electronic image-processing system.

**Revendications**

1. Dispositif pour examiner par radioscopie des objets (2), ce dispositif comportant deux sources de rayons X (4, 5), un espace de contrôle (7) pour les objets (2), comportant une surface d'entrée (8) en forme de bande pour le rayonnement X et une surface réceptrice (1) en forme de bande disposée en arrière de cette face de contrôle suivant la direction du rayonnement X, dans lequel les sources de rayons X (4, 5) sont disposées entre elles et par rapport à la surface d'entrée (8), à des distances telles que le rayonnement tombant sur la surface réceptrice (1) de chaque source individuelle de rayons X (4, 5) irradie une partie de l'objet (2), tandis que l'ensemble du rayonnement délivré par toutes les sources de rayons X irradie toutes les parties de l'objet (2), caractérisé par le fait que la longueur de bande de la surface d'entrée (8) et la longueur de bande de la surface réceptrice (1) sont peu différentes et que les sources de rayons X (4, 5) sont disposées approximativement à hauteur des deux extrémités de la bande de telle sorte que le rayonnement des deux sources de rayons X (4, 5) atteint l'ensemble de la surface de l'objet (2) qui est la plus rapprochée.

2. Dispositif suivant la revendication 1, caractérisé par le fait que l'affaiblissement des rayons X est mesuré dans au moins une ligne ou une colonne de détecteur, que ces valeurs de mesure sont envoyées à une ligne ou une colonne d'une mémoire d'images et que les valeurs de mesure produites par les deux sources de rayons X (4, 5) sont mémorisées séparément les unes des autres.

3. Dispositif suivant la revendication 2, caractérisé par le fait que les valeurs de mesure mémorisées séparément en tant qu'images partielles des deux sources de rayons X (4, 5) sont reproduites séparément.

4. Dispositif suivant la revendication 2, caractérisé par le fait que les valeurs de mesure, mémorisées séparément, des sources à rayons X (4, 5) sont réunies par un système électronique de traitement d'images pour former une seule image.

FIG 1

FIG 2

FIG 3